# EUROPÄISCHE PATENTSCHRIFT

(11) **EP 1 084 383 B1**
(45) Veröffentlichungstag und Bekanntmachung des Hinweises auf die Patenterteilung: **20.08.2008**
(21) Anmeldenummer: 99920792.1
(22) Anmeldetag: 27.04.1999
(51) Int. Cl.: G01F 23/296

(54) **VERFAHREN UND VORRICHTUNG ZUM ERMITTELN DES FÜLLSTANDS VON BEHÄLTERN**
METHOD AND DEVICE FOR DETERMINING THE FILLING LEVEL IN CONTAINERS
PROCEDE ET DISPOSITIF POUR DETERMINER LE NIVEAU DE REMPLISSAGE DE RECIPIENTS

(30) Priorität: 27.04.1998 DE 19818768
(43) Veröffentlichungstag der Anmeldung: 21.03.2001
(73) Patentinhaber: HEUFT SYSTEMTECHNIK GMBH, 56659 Burgbrohl (DE)
(72) Erfinder: HEUFT, Bernhard, D-56659 Burgbrohl (DE); GOLLER, Hans-Ulrich, D-53173 Bonn (DE)
(74) Vertreter: Gritschneder, Martin
(86) Internationale Anmeldenummer: PCT/EP1999/002828
(87) Internationale Veröffentlichungsnummer: WO 1999/056094

(56) Entgegenhaltungen:
- EP-A- 0 831 308
- DE-A- 4 004 965
- GB-A- 2 298 279

## Beschreibung

Die Erfindung betrifft ein Verfahren und eine Vorrichtung zum Ermitteln des Füllstands von Behältern, wobei in einer Behälterwand berührungslos mechanische Schwingungen erzeugt werden, die erzeugten mechanischen Schwingungen berührungslos aufgenommen werden und die aufgenommenen Schwingungen analysiert werden.

Aus GB 2 298 279 A ist ein solches Verfahren bekannt, wobei von der Feststellung ausgegangen wird, daß sich bei einer bestimmten Art von Gasbehältern nicht die Resonanzfrequenz sondern nur die Frequenzamplitude in Abhängigkeit von der enthaltenen Restmenge ändert. Zur Feststellung der Restmenge werden daher mittels eines Lautsprechers Schallwellen dieser Resonanzfrequenz auf den Behälter gerichtet und wird die Intensität der zurückgestrahlten Schallwellen dieser Frequenz ermittelt und mit einem Schwellwert verglichen.

Aus DE 40 04 965 A1 ist es bekannt, Behälter auf Dichtheit von angebrachten Unterdruckverschlüssen zu prüfen, indem in dem Unterdruckverschluß durch ein kurzzeitiges Magnetfeld berührungslos mechanische Schwingungen erzeugt werden und die erzeugte Schwingung in Bezug auf Frequenz, Periodendauer und/ oder Dämpfung ausgewertet wird.

Aus US-A-3 802 252, US-A-4 811 595, US-A-5 353 631 und GB-A-2 293 450 ist es bekannt, den Innendruck eines Behälters dadurch zu ermitteln, daß eine Behälterwand mechanisch oder magnetisch angestoßen wird und die Resonanzfrequenz des Behälters gemessen wird, aus der dann der Innendruck abgeleitet wird.

Aus DE-A-40 08 135 ist ein Verfahren zum Feststellen eines minimalen und maximalen Füllstandes bekannt, bei dem jeweils an einer bestimmten Stelle der Außenwand des Behälters die Resonanzfrequenz ermittelt wird. Zum Erzeugen der Schwingungen und zum Abtasten der Schwingungen werden Piezo-Kristalle verwendet.

Aus DE-A-41 00 338 ist ein Verfahren bekannt, bei dem der Grad der Befüllung des Behälters mit rieselfähigem Gut durch Messung der Frequenz der Körperschallschwingungen des Behältergehäuses durch einen unmittelbar auf die Behälterwand aufgesetzten Sensor ermittelt wird.

Aus DE-A-197 11 093 (=EP 0 831 308 A) ist ein Verfahren bekannt, bei dem der Inhalt einer Flüssiggasflasche dadurch bestimmt wird, daß mittels eines an die Außenseite der Gasflasche angelegten Schallsenders auf die Gasflasche ein Schallsignal gerichtet und daß das von der Gasflasche abgegebene Schallsignal aufgenommen und daß beide Signale verglichen werden. Das Sendesignal durchfährt dabei einen größeren Frequenzbereich und durch Messung der Amplitude des Empfangssignals wird die Resonanzfrequenz festgestellt.

Aus WO 94/24526 ist ein Verfahren bekannt, bei dem in einem Behälter ebene Ultraschallwellen in einer flüssigen Probe erzeugt werden und die Frequenzabhängigkeit der Amplitude und/oder der Phase der Resonanzen ausgemessen wird.

In der älteren, noch nicht veröffentlichten Anmeldung DE-A-196 46 685 (= WO 98/21557) wird ein Verfahren zur Bestimmung des Füllstands von verschlossenen Behältern beschrieben, wobei in einer Behälterwand primäre mechanische Schwingungen angeregt werden und dann die durch die primären mechanischen Schwingungen der Behälterwand innerhalb des Behälters angeregten sekundären Schwingungen, die innerhalb des Raumes zwischen Verschluß und der Flüssigkeit stattfinden, analysiert werden. Aus der Frequenz dieser sekundären Schwingungen kann der Füllstand ermittelt werden.

In der älteren, noch nicht veröffentlichten Anmeldung DE-A-197 36 869 (= WO 99/10722) wird ein Verfahren zum Prüfen des Restluftvolumens von Behältern, die mit einem Verschluß verschlossen sind, beschrieben. In den Behältern wird dabei die Flüssigkeit zur Verdrängung des Restluftvolumens vor dem Verschließen aufgeschäumt. Das Restluftvolumen wird ermittelt, indem in dem Verschluß mechanische Schwingungen angeregt werden, die unmittelbar nach dem Aufbringen des Verschlusses, bevor in dem Behälter eine wesentliche Änderung des Innendrucks stattfindet, analysiert werden. In die Schwingungsanalyse wird dabei die Frequenz, die Abklingzeit, die Schwingungsamplitude und/oder das Zeitintegral der Schwingungsamplitude einbezogen.

Der Erfindung liegt die Aufgabe zugrunde, den Füllstand von Behältern, insbesondere von Dosen, auf möglichst einfache und schnelle Weise zu bestimmen.

Diese Aufgabe wird erfindungsgemäß dadurch gelöst, daß die Schwingung in einer Behälterwand erzeugt wird, die in Abhängigkeit vom Füllstand unterschiedlich weit von der Füllung berührt wird, und daß die Analyse der aufgenommenen Schwingungen daraufhin erfolgt, wie weit die Behälterwand auf der Innenseite von der Füllung berührt wird, und die Auswertung der Abklingzeit, der Frequenz, der Intensität und/oder des Zeitintegrals der Intensität oder die Ermittlung des Orts der maximalen Intensität der mechanischen Schwingung beinhaltet.

Die mechanischen Schwingungen in der Behälterwand werden in bekannter Weise durch einen kurzen von einer Magnetspule ausgehenden magnetischen Impuls erzeugt. Der magnetische Impuls lenkt die Behälterwand kurzzeitig aus und die Behälterwand schwingt nach dem Ende des magnetischen Impulses zurück. Die mechanische Schwingung der Behälterwand erzeugt akustische Schwingungen, die ihrerseits durch ein Mikrophon, Magnetaufnehmer oder dergleichen empfangen werden können. Diese Meßtechnik ist im Zusammenhang mit der Bestimmung des Innendrucks von Behältern seit langem bekannt. Diese mechanischen Schwingungen klingen mit einer bestimmten Zeitkonstante ab. Die Zeitkonstante ist relativ klein, d.h. die Dämpfung ist groß, wenn der Behälter gefüllt ist. Je kleiner die Füllung ist um so größer wird die Zeitkonstante der Schwingung. Der Füllstand wirkt sich besonders signifikant auf die Schwingungsdämpfung aus.

Die erhöhte Dämpfung wirkt sich auch auf das Zeitintegral der Schwingungsamplitude aus. Dieses Zeitintegral ist proportional der Fläche unter der die Schwingung darstellenden Kurve in einem Diagramm der Schwingungsamplitude über der Zeit. Je kleiner diese Fläche ist, um so höher ist der Füllstand.

Zusätzlich ergeben sich außerdem Verschiebungen in der Schwingungsfrequenz, die ebenfalls ausgewertet werden können. Im allgemeinen gilt dabei, daß die Frequenz mit steigendem Füllstand höher wird.

Dadurch, daß die mechanischen Schwingungen berührungslos, z.B. durch einen magnetischen Impuls, in der Behälterwand erzeugt werden und auch die Aufnahme der Schwingungen berührungslos erfolgt, eignet sich das erfindungsgemäße Verfahren insbesondere zur Ermittlung des Füllstands von Behältern, die auf einem Förderband oder einer sonstigen Transporteinrichtung befördert werden.

In einer bevorzugten Ausgestaltung der Erfindung werden die Schwingungen der Behälterwand durch zwei im Abstand übereinander angeordnete Mikrophone aufgenommen und wird durch einen Vergleich der Schwingungsphasen der Ort der Schallquelle ermittelt. Es wird hierbei ausgenützt, daß die Schwingungen in der Behälterwand unterhalb des Flüssigkeitsniveaus stark gedämpft sind, so daß hauptsächlich der Teil der Behälterwand, der über dem Flüssigkeitsniveau liegt, schwingt, so daß sich mit steigendem Füllstand der Mittelpunkt der in dem Behälter erzeugten Schwingungen nach oben verschiebt. Über eine Ortung der Schallquelle kann daher auch eine Information über die Füllhöhe gewonnen werden.

Bei der Auswertung der Schwingung hinsichtlich Dämpfung und Frequenz spielt der Abstand zwischen Magnetspule und Behälter sowie zwischen Behälter und Mikrophon keine große Rolle. Diese beiden Abstände müssen jedoch berücksichtigt werden, wenn die Schwingungen hinsichtlich des Zeitintegrals der Amplitude ausgewertet werden, da hier die absolute Intensität der Schwingung in das Meßergebnis eingeht. Bei Auswertung der Schwingung hinsichtlich des Zeitintegrals der Intensität oder Amplitude wird daher vorzugsweise der Abstand zwischen Magnetspule und Behälterwand und zwischen Behälterwand und Mikrophon berücksichtigt. Die Messung des Abstandes kann in bekannter Weise durch einen Laserstrahl, induktiv, oder über Ultraschall erfolgen.

Aufgrund von Wellenbewegungen und Schwappeffekten der Flüssigkeit in dem Behälter kommt es zu Meßungenauigkeiten. Zur Verbesserung der Meßgenauigkeit werden daher vorzugsweise mehrere Meßeinrichtungen hintereinander geschaltet, wobei jede Meßeinrichtung aus einer Magnetspule und einem oder zwei Mikrophonen besteht. Da die Kosten einzelner Meßeinrichtungen relativ niedrig sind, kann durch eine größere Anzahl, z.B. 10 oder mehr, Meßeinrichtungen und Bildung des Mittelwerts aus den Ergebnissen aller Meßeinrichtungen eine deutliche Verbesserung der Genauigkeit erzielt werden. Durch eine größere Anzahl von Meßeinrichtungen wird nicht nur die durch das Schwappen der Flüssigkeit verursachte Ungenauigkeit sondern auch die inhärenten Meßungenauigkeiten des Systems vermindert. Die Meßeinrichtungen können dabei auf beiden Seiten des Behälters oder der Dose angeordnet sein.

Ausführungsbeispiele der Erfindung werden nachfolgend anhand der Zeichnung erläutert. Es zeigen:
- Fig. 1: eine Anordnung zur Erzeugung von mechanischen Schwingungen in einer Dose und zum Empfang der durch diese Schwingungen erzeugten akustischen Signale;
- Fig. 2: eine Anordnung ähnlich der von Fig. 1 jedoch mit zwei Mikrophonen zur Bestimmung des Mittelpunkts der akustischen Schwingungen bei Unterfüllung und
- Fig. 3: die Anordnung von Fig. 2 bei normaler Füllung der Dose.

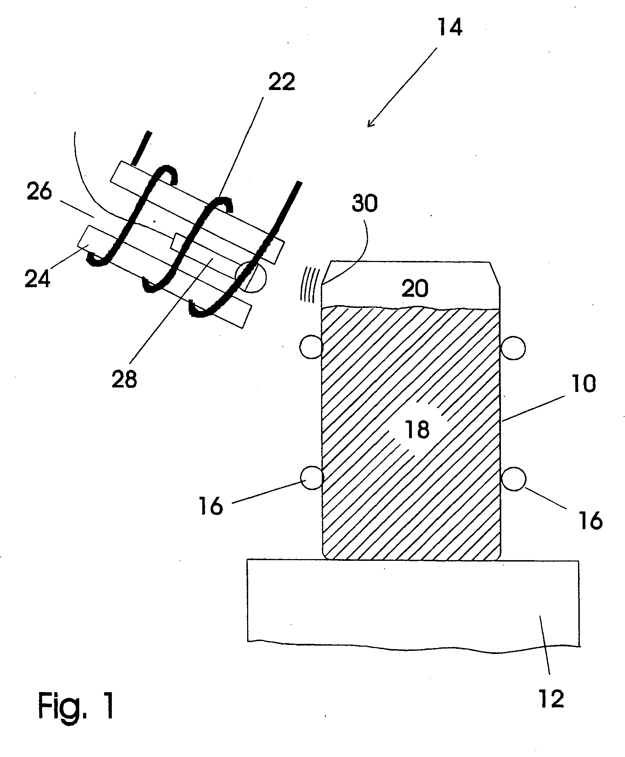

Bei den in den Figuren gezeigten Ausführungsbeispielen werden Dosen 10 auf einem Transporteur 12 an einer Meßeinrichtung 14 vorbeibewegt. In Fig. 1 werden die Dosen noch durch feststehende seitliche Geländer 16 geführt. Die Dosen 10 sind teilweise mit Flüssigkeit 18 gefüllt und über der Flüssigkeit befindet sich ein Luftraum 20.

Die Meßeinrichtung 14 besteht aus einer Magnetspule 22 und einem Kern 24, der eine axiale Aussparung 26 aufweist. In der Aussparung 26 befinden sich ein oder zwei Mikrophone 28. An die Magnetspule 22 können mittels einer nicht dargestellten Stromquelle kurze Stromimpulse angelegt werden, so daß die Magnetspule entsprechende kurze Magnetimpulse aussendet. Die Meßeinrichtung 14 ist in möglichst geringem Abstand von einer Seitenwand der vorbeilaufenden Dosen 10 angeordnet und die Magnetspule 22 wird so gesteuert, daß sie dann, wenn der Abstand zu einer vorbeilaufenden Dose 10 am kleinsten ist, den magnetischen Impuls aussendet. Die Seitenwand 30 der Dose 10 wird dadurch kurzzeitig zur Magnetspule 22 hin ausgelenkt, wodurch in der Seitenwand 30 eine mechanische Schwingung angestoßen wird, die sehr rasch wieder abklingt. Die Meßeinrichtung 14 ist dabei etwa in der Höhe des Flüssigkeitsniveaus bei normaler Füllung der Dosen 10 angeordnet.

Die durch den magnetischen Impuls angestoßenen Schwingungen werden von dem oder den Mikrophonen 28 als akustische Schwingungen aufgenommen und durch eine nicht dargestellte Auswerteinrichtung ausgewertet.

Die Meßeinrichtung 14 mit der Magnetspule 22 und den Mikrophonen 28 ist in den Figuren nur schematisch dargestellt. Tatsächlich kann die Magnetspule 22 jede übliche Form haben, z.B. Topfform oder Hufeisenform, durch die das Magnetfeld auf der zu den Dosen 10 hin gerichteten Seite konzentriert wird.

Die Abklingzeit der mechanischen Schwingungen hängt vom Füllstand ab. Je höher der Füllstand in der Dose 10 ist, um so kürzer ist die Abklingzeit. Das von den Mikrophonen 28 empfangene Schwingungssignal wird in der Auswerteeinrichtung ausgewertet. Mittels üblicher elektronischer Auswerteeinrichtungen kann die Abklingzeit der Schwingung ermittelt werden. Anhand von einigen Testdurchläufen mit unterschiedlich gefüllten Dosen 10 wird eine Wertetabelle aufgestellt, anhand der dann aus der Abklingzeit der Füllstand abgelesen werden kann.

Ebenso ändert sich die Frequenz der angestoßenen mechanischen Schwingung in Abhängigkeit vom Füllstand, so daß mittels einer entsprechenden Wertetabelle auch anhand der ermittelten Frequenz der mechanischen Schwingung der Füllstand abgelesen werden kann.

Auch die Intensität der Schwingung hängt vom Füllstand ab, so daß auch durch ihre Messung eine Aussage über den Füllstand getroffen werden kann. Da die Intensität jedoch zusätzlich vom Abstand der Magnetspule 22 und der Mikrophone 28 von der Dose 10 abhängt, muß der gemessene Intensitätswert zunächst anhand dieser Abstände korrigiert und normiert werden. Die Messung des Abstands kann z.B. mittels Laufzeitmessung eines Laserstrahls erfolgen.

Sehr deutlich hängt schließlich auch noch das Zeitintegral der Amplitude oder Intensität der angestoßenen mechanischen Schwingung vom Füllstand ab. Auch hierbei muß eine Korrektur entsprechend dem Abstand der Meßeinrichtung 14 von der Dose 10 erfolgen.

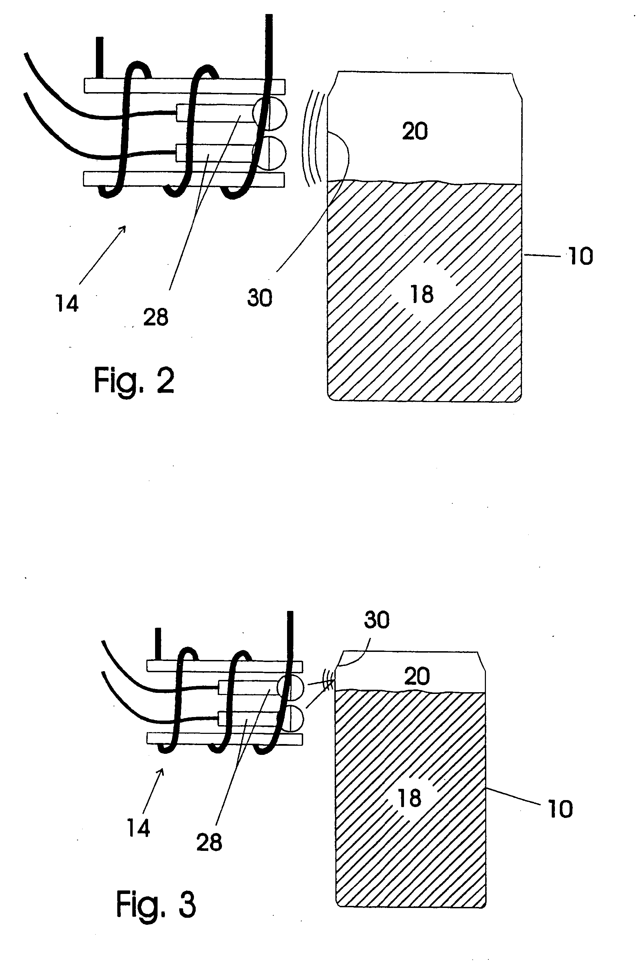

Bei dem in den Figuren 2 und 3 dargestellten Ausführungsbeispiel sind zwei Mikrophone 28 vorhanden. Durch einen Phasenvergleich der von den beiden Mikrophonen 28 aufgenommenen Schwingungssignale kann dabei die Richtung festgestellt werden, aus der das akustische Signal kommt, und unter Berücksichtigung des Abstandes der Dose 10 von der Meßeinrichtung 14 die Stelle innerhalb der Seitenwand 30 der Dose 10 ermittelt werden, von der das stärkste akustische Signal ausgeht. Es hat sich nämlich gezeigt, daß die angestoßene mechanische Schwingung ihre größte Intensität und Amplitude etwa in der Mitte des Bereichs der Seitenwand 30 hat, der über dem Füllstand liegt. Durch die Verwendung von zwei Mikrophonen 28 kann daher diese Stelle der stärksten Intensität der mechanischen Schwingungen festgestellt werden und unter Berücksichtigung der Gesamthöhe der Dosen 10 daraus der Füllstand ermittelt werden.

## Patentansprüche

1. Verfahren zur Ermittlung des Füllstands von Behältern (10), wobei in einer Behälterwand (30) berührungslos mechanische Schwingungen erzeugt werden, die erzeugten mechanischen Schwingungen berührungslos aufgenommen werden und die aufgenommenen Schwingungen analysiert werden,
**dadurch gekennzeichnet,**
- **daß** die mechanischen Schwingungen durch eine kurzzeitige, impulsartige Auslenkung der Behälterwand (30) erzeugt werden, die in Abhängigkeit vom Füllstand unterschiedlich weit von der Füllung berührt wird, und
- **daß** die Analyse der aufgenommenen Schwingungen daraufhin erfolgt, wie weit die Behälterwand (30) auf der Innenseite von der Füllung berührt wird, und die Auswertung der Abklingzeit, der Frequenz, der Intensität und/oder des Zeitintegrals der Intensität oder die Ermittlung des Orts der maximalen Intensität der mechanischen Schwingung beinhaltet, wobei zur Ermittlung des Ortes der maximalen Intensität der mechanischen Schwingungen durch zwei im Abstand von einander angeordnete Mikrophone aufgenommen werden und die Schwingungsphasen der von jedem Mikrophon aufgenommenen Schwingungen verglichen werden.

2. Verfahren nach Anspruch 1, **dadurch gekennzeichnet, daß** an einem Behälter (10) mehrfach der Füllstand ermittelt wird und der Mittelwert der ermittelten Füllstände gebildet wird.

3. Verfahren nach Anspruch 1 oder 2, **dadurch gekennzeichnet, daß** die mechanische Schwingung an einer Stelle der Behälterwand (30) erzeugt wird, die etwa auf der Höhe der Normalfüllung liegt.

4. Verfahren nach einem der Ansprüche 1 bis 3, **dadurch gekennzeichnet, daß** bei der Analyse der aufgenommenen Schwingungen hinsichtlich des Zeitintegrals der Intensität oder Amplitude der Abstand zwischen der Einrichtung zur Erzeugung der mechanischen Schwingungen und der Behälterwand und der Abstand zwischen der Behälterwand und der Einrichtung zur Aufnahme der Schwingungen berücksichtigt wird.

5. Verfahren nach Anspruch 4, **dadurch gekennzeichnet, daß** die Messung des Abstandes mittels Laserstrahl, induktiv, oder durch Ultraschall erfolgt.

6. Vorrichtung zur Durchführung des Verfahrens nach einem der Ansprüche 1 bis 5, mit einer Einrichtung (22) zur Erzeugung mechanischer Schwingungen in der Behälterwand (30) und mit einer Einrichtung (28) zur Aufnahme und zur Auswertung der mechanischen Schwingungen, wobei die Einrichtung (22, 28) zur Erzeugung mechanischer Schwingungen in der Behälterwand (30) eine Magnetspule aufweist, die so angeordnet ist, daß sie in der Seitenwand eines vorbeilaufenden Behälters (10) durch einen magnetischen Impuls eine kurzzeitige Auslenkung zur Erzeugung der mechanischen Schwingungen bewirkt, **dadurch gekennzeichnet, dass** die Magnetspule (22) so angesteuert wird, dass sie dann, wenn der Abstand eines vorbeilaufenden Behälters (10) am kleinsten ist, den magnetischen Impuls aussendet, der kurz ist und eine kurzzeitige Auslenkung der Seitenwand eines vorbeilaufenden Behälters (10) bewirkt.

7. Vorrichtung zur Durchführung des Verfahrens nach einem der Ansprüche 1 bis 6, mit einer Stromquelle und einer Magnetspule (22) zur Erzeugung mechanischer Schwingungen in der Behälterwand (30) und mit einer Einrichtung (28) zur Aufnahme und zur Auswertung der mechanischen Schwingungen, **dadurch gekennzeichnet, daß** die Stromquelle einen kurzen Stromimpuls an die Magnetspule (22) anlegt und dass die Magnetspule (22) so angeordnet ist, daß sie in der Seitenwand eines vorbeilaufenden Behälters (10) durch einen magnetischen Impuls eine kurzzeitige Auslenkung zur Erzeugung der mechanischen Schwingungen bewirkt.

## Claims

1. Method for ascertaining the fill level of vessels (10), mechanical vibrations being produced without contact in a vessel wall (30), the produced mechanical vibrations being recorded without contact and the recorded vibrations being analysed,
**characterized in that**
- the mechanical vibrations are produced by a brief, pulse-like deflection of the vessel wall (30) which is touched by the contents to an extent which varies depending on the fill level, and
- the anylysis of the recorded vibrations is carried out for the purpose to discover to what extent the vessel wall (30) is touched on the inside by the contents and includes the evaluation of the decay time, the frequency, the intensity and/or the time integral of the intensity or the ascertaining of the site of the maximum intensity of the mechanical vibration wherein, to ascertain the site of the maximum intensity of the mechanical vibrations, the mechanical vibrations are recorded by two microphones arranged at a distance from each other and the vibration phases of the vibrations recorded by each microphone are compared.

2. Method according to claim 1, **characterized in that** the fill level in a vessel (10) is ascertained several times and the average value of the ascertained fill levels is formed.

3. Method according to one of claim 1 or 2, **characterized in that** the mechanical vibration is produced at a point on the vessel wall (30) which is roughly at the height of the normal fill.

4. Method according to any one of claims 1 to 3, **characterized in that** for the analysis of the recorded vibrations with regard to the time integral of the intensity or the amplitude the distance between device for producing the mechanical vibrations and vessel wall and the distance between vessel wall and device for recording the vibrations are taken into account.

5. Method according to claim 4, **characterized in that** the distance is measured by means of laser beam, inductively or by ultrasound.

6. Device for carrying out the method according to any one of claims 1 to 5, with a device (22) for producing mechanical vibrations in the vessel wall (30) and with a device (28) for recording and evaluating the mechanical vibrations, wherein the device (22, 28) for producing mechanical vibrations in the vessel wall (30) has a magnetic coil which is arranged such that it can effect, in the side wall of a passing vessel (10), by a magnetic pulse a brief deflection for producing the mechanical vibrations, **characterized in that** the magnetic coil (22) is controlled such that it emits the magnetic pulse when the distance from a passing vessel (10) is at its smallest, which magnetic pulse being short and being briefly deflecting the vessel wall of a passing vessel (10).

7. Device for carrying out the method according to any one of claims 1 to 6, with a current source and a magnetic coil (22) for producing mechanical vibrations in the vessel wall (30) and with a device (28) for recording and evaluating the mechanical vibrations, **characterized in that** the current source applies a short current puls to the magnetic coil (22) and that the magnetic coil (22) is arranged such that it produces in the side wall of a passing vessel (10), by a magnetic pulse, a brief deflection for producing the mechanical vibrations.

## Revendications

1. Procédé de détermination du niveau de remplissage de récipients (10), des vibrations mécaniques étant produites sans contact dans une paroi de récipient (30), les vibrations mécaniques produites sont enregistrées sans contact et les vibrations enregistrées sont analysées, **caractérisé en ce que**
- les vibrations mécaniques sont produites par une déviation momentanée impulsionnelle de la paroi de récipient (30), qui est touchée par le produit de remplissage de façon différemment éloignée en fonction du niveau de remplissage, et
- **en ce que** l'analyse des vibrations enregistrées s'effectue d'après cela suivant l'éloignement par lequel la face intérieure de la paroi de récipient (30) est touchée par le produit de remplissage, et implique l'évaluation de la durée de réponse, de la fréquence, de l'intensité et/ou de l'intégrale de temps de l'intensité ou la détermination du point d'intensité maximale des vibrations mécaniques, sachant que pour déterminer le point d'intensité maximale des vibrations mécaniques celles-ci sont enregistrées par deux microphones distants l'un de l'autre et les phases de vibration sont comparées aux vibrations enregistrées par chaque microphone.

2. Procédé selon la revendication 1, **caractérisé en ce que** le niveau de remplissage est déterminé sur un récipient (10) à plusieurs reprises et la valeur moyenne des niveaux déterminés est formée.

3. Procédé selon la revendication 1 ou 2, **caractérisé en ce que** la vibration mécanique est produite à un emplacement de la paroi de récipient (30) qui se situe approximativement à hauteur du remplissage normal.

4. Procédé selon l'une quelconque des revendications 1 à 3, **caractérisé en ce que** lors de l'analyse des vibrations enregistrées en ce qui concerne l'intégrale de temps de l'intensité ou l'amplitude, l'écart entre le dispositif de production des vibrations mécaniques et la paroi de récipient et l'écart entre la paroi de récipient et le dispositif d'enregistrement des vibrations sont pris en compte.

5. Procédé selon la revendication 4, **caractérisé en ce que** la mesure de l'écart s'effectue au moyen d'un faisceau laser, de manière inductive, ou par ultrasons.

6. Dispositif de réalisation du procédé selon l'une quelconque des revendications 1 à 5, comprenant un dispositif (22) de production de vibrations mécaniques dans la paroi de récipient (30) et comprenant un dispositif (28) d'enregistrement et d'évaluation des vibrations mécaniques, le dispositif (22, 28) de production de vibrations mécaniques dans la paroi de récipient (30) comprenant une bobine d'électro-aimant qui est disposée de sorte qu'elle réalise dans la paroi latérale d'un récipient (10) en train de défiler grâce à une impulsion magnétique une déviation momentanée destinée à produire les vibrations mécaniques, **caractérisé en ce que** la bobine d'électroaimant (22) est commandée de sorte que, lorsque l'écart par rapport à un récipient (10) en train de défiler est le plus petit, elle envoie alors l'impulsion magnétique qui est courte et provoque une déviation momentanée de la paroi latérale d'un récipient (10) en train de défiler.

7. Dispositif de réalisation du procédé selon l'une quelconque des revendications 1 à 6, comprenant une source de courant et une bobine d'électro-aimant (22) destinée à produire des vibrations mécaniques dans la paroi de récipient (30) et comprenant un dispositif (28) destiné à enregistrer et à évaluer les vibrations mécaniques, **caractérisé en ce que** la source de courant applique une courte impulsion de courant sur la bobine d'électro-aimant (22) et **en ce que** la bobine d'électroaimant (22) est disposée de sorte qu'elle provoque dans la paroi latérale d'un récipient (10) en train de défiler grâce à une impulsion magnétique une déviation momentanée destinée à produire les vibrations mécaniques.
